## Europäisches Patentamt

## European Patent Office

## Office européen des brevets

(11) Publication number: **0 182 348**
**B1**

# EUROPEAN PATENT SPECIFICATION

(45) Date of publication of patent specification: **12.04.89**

(21) Application number: **85114687.8**

(22) Date of filing: **19.11.85**

(51) Int. Cl.⁴: **G 11 B 5/52**

(54) **Rotary cylinder device.**

(30) Priority: **20.11.84 JP 243166/84**

(43) Date of publication of application:
**28.05.86 Bulletin 86/22**

(45) Publication of the grant of the patent:
**12.04.89 Bulletin 89/15**

(84) Designated Contracting States:
**DE FR GB**

(56) References cited:
**DE-A-3 244 215**
**FR-A-2 519 175**
**GB-A-2 133 604**
**US-A-4 163 266**
**US-A-4 251 838**

(73) Proprietor: **HITACHI, LTD.**
**6, Kanda Surugadai 4-chome Chiyoda-ku Tokyo (JP)**
(73) Proprietor: **Hitachi Video Engineering, Incorporated**
**292, Yoshidacho, Totsuka-ku Yokohama-shi Kanagawa-ken (JP)**

(72) Inventor: **Kaku, Nobuyuki**
**1076-1-401, Gumizawacho Totsuka-ku Yokohama (JP)**
Inventor: **Osawa, Atsuo**
**Keimeiryo 505 850, Maiokacho Totsuka-ku Yokohama (JP)**
Inventor: **Kochi, Masanori**
**Isikawa Terasu Apartment House 8 14-1-8 Ishikawacho Katsuta-shi (JP)**
Inventor: **Takizawa, Hitoshi**
**Yorii Apartment House 142 391-2 Tabiko Katsuta-shi (JP)**

(74) Representative: **Altenburg, Udo, Dipl.-Phys. et al**
**Patent- und Rechtsanwälte Bardehle-Pagenberg-Dost-Altenburg-Frohwitter & Partner Postfach 86 06 20 D-8000 München 86 (DE)**

Courier Press, Leamington Spa, England.

## Description

### BACKGROUND OF THE INVENTION

### FIELD OF THE INVENTION:

The present invention relates to a magnetic recording/reproducing apparatus of helical scan type and, more particularly, to a rotary cylinder device having magnetic heads which are held in contact with a magnetic tape so as to scan the tape as a rotary cylinder rotates.

### DESCRIPTION OF THE PRIOR ART:

Generally, a helical scan type magnetic recording/reproducing apparatus has a rotary cylinder device carrying a plurality of magnetic heads which are adapted to be brought into contact with a magnetic tape successively and alternatingly, thereby forming recording tracks on the magnetic tape or to scan the tracks for the purpose of reproduction.

A known rotary cylinder device used in magnetic recording/reproducing apparatus of the type described has a rotary shaft and a rotary cylinder which is disposed to oppose a stationary cylinder leaving therebetween a slight gap in the direction of axis of the rotary shaft. The rotary cylinder has an end surface facing the stationary cylinder and an outer peripheral surface. Recesses are formed in the end surface of the rotary cylinder in such a manner as to open in the outer peripheral surface and to extend therefrom radially inwardly of the rotary cylinder over a small distance. Each recess has a leading end surface and a trailing end surface as viewed in the direction of rotation of the rotary cylinder.

Magnetic heads are fixed in the recesses of the rotary cylinder, in such a manner that their outer extremities project beyond the outer peripheral surface of the rotary cylinder.

This rotary cylinder device encounters a problem in that air is induced into the recesses during operation of the rotary cylinder device such as to cause the magnetic tape to contact the surfaces of the recesses, resulting in vibration and damage of the tape.

FR-A1-2 519 175 discloses a magnetic recording/ reproducing head of the type comprising a rotary cylinder co-axial with and in end-to-end disposition with respect to a stationary cylinder, and of the kind in which the tape in passing over this recording head contacts it for approximately 180° of its circumference. In the rotary cylinder are magnetic heads mounted in recesses formed in its peripheral surface. These recesses as viewed from the side of the rotary cylinder are disposed intermediate the upper and lower ends of the rotary cylinder, assuming it to rotate about a vertical axis, and the recesses are each in the form of an elongated opening extending in the direction of rotation of the rotary cylinder and having rounded ends. Here again. the leading and trailing edges of each recess can cause air turbulences leading to a vibration of the tape. The reason for this is that although the ends of each recess are rounded they extend above and below the major axis of the recesses and thus in the vicinity of said major axis their effect is substantially equal to the edge of an opening extending parallel to the axis of rotation, resulting in the disadvantage air turbulence already, referred to.

### SUMMARY OF THE INVENTION

Accordingly, an object of the invention is to provide a rotary cylinder device which is capable of suppressing vibration and damaging of the tape due to induction of air into the recesses, thereby ensuring a high quality of the reproduced image while obviating the above-described problem of the prior art.

To this end, according to the invention, there is provided a rotary cylinder device comprising: a rotary cylinder having an axis of rotation and arranged opposed to and co-axial with a stationary cylinder leaving a small gap therebetween, the rotary cylinder having an end surface facing the stationary cylinder and an outer peripheral surface, and recesses formed in the end surface and opening in said outer peripheral surface such as to extend therefrom radially inwardly over a small distance, each of said recesses having a leading end wall and a trailing end wall as viewed in the direction of rotation of the rotary cylinder; and magnetic heads fixed to the rotary cylinder and positioned in said recesses and having outer extremities projecting beyond the outer peripheral surface of the rotary cylinder; wherein the distance between the leading end wall and the trailing end wall of each recess is progressively decreased in a direction away from the stationary cylinder such that the distance is greatest at said end surface of the rotary cylinder and smallest at the end of said resess remote from the stationary cylinder.

The invention will become clear from the following description of the preferred embodiments.

### BRIEF DESCRIPTION OF THE DRAWINGS

Fig. 1 is a perspective view of a rotary cylinder incorporated in a first embodiment of the rotary cylinder device of the invention, as viewed in the direction of arrows I—I in Fig. 2;

Fig. 2 is a vertical sectional view of the whole portion of the first embodiment taken along the axis thereof;

Fig. 3 is an enlarged view of a portion of the rotary cylinder, showing in particular one of recesses formed in the rotary cylinder;

Fig. 4 is an illustration of the behaviour of a magnetic tape running in the vicinity of the recess;

Fig. 5 is a perspective view of a rotary cylinder incorporated in the second embodiment of the rotary cylinder device of the invention, as viewed in the direction of arrows V—V of Fig. 6;

Fig. 6 is a vertical sectional view of the whole portion of the second embodiment taken along the axis thereof;

Fig. 7 is an enlarged sectional view of an essential portion of the second embodiment;

Fig. 8 is a view similar to Fig. 7, showing a modification of the arrangement shown in Fig. 7;

Fig. 9 is a perspective view of a rotary cylinder device illustrating a general positional relationship between a magnetic tape and the rotary cylinder device in a magnetic recording/reproducing apparatus of helical scan type; and

Fig. 10 is a view similar to Fig. 3, showing an example of the configuration of a recess formed in a conventional rotary cylinder.

## DETAILED DESCRIPTION OF THE PREFERRED EMBODIMENTS

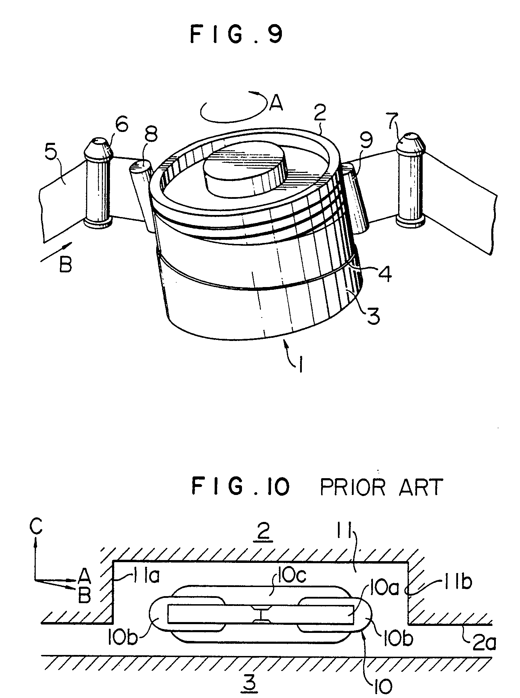

Fig. 9 is a perspective view showing a general arrangement of a rotary cylinder device in an ordinary magnetic recording/reproducing apparatus of helical scan type. The rotary cylinder device generally denoted by a numeral 1 has a rotary cylinder 2 and a stationary cylinder 3 which are oppose each other in the direction of axis of rotation of the rotary cylinder 2. The rotary cylinder 2 mounts a pair of magnetic heads, while the stationary cylinder is provided with a spiral tape lead 4 on the outer peripheral surface thereof.

A magnetic tape 5 extracted from a tape cassette (not shown) leads along a guide roller 6 and a slant guide 8, and is wound spirally around the rotary cylinder 2 and the stationary cylinder 3 over about 180° with its lower edge contacting the tape lead 4. Then, the tape further leads into the cassette through a slant guide 9 and a guide roller 7.

As the magnetic tape 5 is driven in the direction of an arrow B by a tape driving system (not shown) for the purpose of recording or reproduction, the tape turns around the guide roller 6 and runs in contact with the outer peripheral surfaces of the rotary cylinder 2 and the stationary cylinder 3. During running on the cylinders, any undesirable twisting of the tape is avoided by virtue of the slant guides 8 and 9. The tape then turns around the guide roller 7 and is taken up by a take-up reel in the cassette. On the other hand, the rotary cylinder 2 is rotated in the direction of an arrow A by a cylinder motor which is not shown, so that two magnetic heads on the rotary cylinder contact the magnetic tape 5 alternatingly over the period of 180° rotation of the rotary cylinder.

In this rotary cylinder device, a lubricating layer constituted by an air layer is formed between the outer peripheral surfaces of the rotary and stationary cylinders 2, 3 and the magnetic tape 5 so that the magnetic tape 5 materially floats above the outer peripheral surfaces of the rotary and stationary cylinders 2 and 3. In order to ensure that the magnetic tape floating above the outer peripheral surface of the cylinders is contacted by the magnetic heads, the magnetic heads are set in recesses formed in the axial end surface of the rotary cylinder 2 facing the stationary cylinder, such that the outer extremity of the magnetic heads project beyond the outer peripheral surface of the rotary cylinder 2.

Fig. 10 is an enlarged front elevational view of a known example of the recess formed in the rotary cylinder. In this Figure, a reference numeral 10 denotes a magnetic head, 10a denotes a head core, 10b denotes coils and 10c denotes a resin portion, and the reference numerals appearing commonly both in Figs. 9 and 10 represents the same parts or members.

Referring to Fig. 10, a recess 11 is formed in the end surface 2a of the rotary cylinder 2 facing the stationary cylinder 3. The end of the magnetic head 10 fixed in the rotary cylinder 2 projects from the outer peripheral surface of the rotary cylinder 2 through the recess 11. The projected end of the magnetic head 10 contacts the magnetic tape 5. In order that the magnetic head 10 is attached to the rotary cylinder 10 easily and precisely, the recess 11 is required to have a certain area.

During the operation of the rotary head device, the rotary cylinder 2 rotates at a high peripheral velocity in the direction of the arrow A, while the tape runs in a direction of an arrow B at a velocity which is negligibly small as compared with the peripheral velocity of the rotary cylinder 2. In consequence, air is introduced to the space between the rotary cylinder 2 and the magnetic tape 5 such as to form an air layer of positive pressure therebetween, so that the magnetic tape 5 floats above the outer peripheral surface of the rotary cylinder 2.

In the area where the recess 11 exists, however, the air flows into the recess 11 so that a negative pressure is established to generate a suction force for sucking the magnetic tape inwardly of the recess 11. Assuming here that the rotary cylinder 2 is rotating in the direction of the arrow A, the magnetic tape 5 is sucked inwardly of the recess first at the region between the end wall 11b of the recess 11 and the leading end of the magnetic head 10 and, after forced out by the magnetic head 10, sucked again in the region between the trailing end of the magnetic head 10 and the end wall 11a. The sucked magnetic tape 5 inevitably contacts the end walls 11a, 11b and is rubbed by the edges of these end walls 11a, 11b, i.e., the boundaries between the end surfaces and the outer peripheral surface of the rotary cylinder, particularly by the edge of the end surface 11a, especially when minute projections such as burs exist on these edges. In consequence, the magnetic surface of the magnetic tape is damaged, with a result that the quality of the reproduced image is degraded.

In order to obviate this problem, Japanese Patent Publication No. 58737/1983 discloses a method in which the edges of the end walls of the recess are plastically deformed inwardly of the recess by means of a punch, thereby to prevent any damage of the magnetic tape. According to this method, the edges of the recess walls are rounded and deformed inwardly of the recess, so that the risk of damaging of the tape is suppressed by virtue of the fact that the tape gently contacts these edges even though the tape is sucked into the recess and, therefore, the undesirable degradation of the quality of reproduced image can be avoided.

This method, however, cannot prevent the suction of the tape itself. On the other hand, turbulent flow of air is generated in the recess due to collision of air with the magnetic head and the end walls of the recess, resulting in a fluctuation of the negative air pressure in the recess. The fluctuation of the negative air pressure causes a vibration of tape sucked into the recess. The greater the turbulency is, the greater the magnitude of vibration is.

It is to be understood also that the greater the area of the recess is, the greater the amount of suction of the tape into the recess becomes, which in turn causes a closer contact between the edges of the recess walls and the tape. This obviously enhances the tendency of vibration of the tape due to rubbing by the edges of the recess walls. The rounding of the edges of the recess walls proposed in the Patent Publication mentioned before materially increases the area of the recess, so that the amount of suction of the magnetic tape into the recess is materially increased and the vibration of the magnetic tape is enhanced accordingly. The vibration of the magnetic tape causes a fluctuation in the state of scanning of the magnetic tape by the magnetic head, particularly the tracking condition and the pressure at which the magnetic head is pressed to the magnetic tape, causing a degradation in the quality of the reproduced image.

The current trend for higher recording density and longer recording time calls for demand for magnetic tapes having smaller thickness and rigidity. Such tapes having reduced thickness and rigidity increases the tendency of the suction of the tape into the recess. Therefore, when the recess has a large area as in the conventional device, the vibration of the magnetic tape is amplified to seriously deteriorate the quality of the reproduced image.

Under these circumstances, the present invention proposes a rotary cylinder device which is capable of obviating the above-described problems of the prior art as will be understood from the following description.

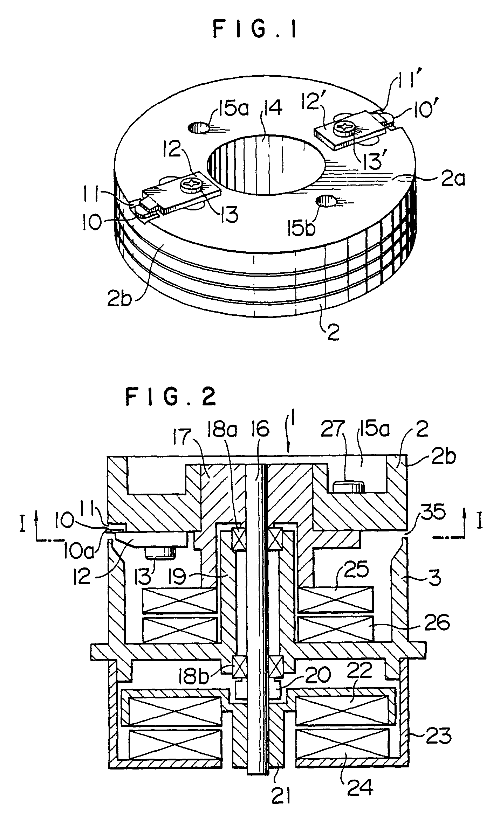

Figs. 1 to 4 show a first embodiment of the rotary cylinder device in accordance with the invention. In these Figures, the same reference numerals are used to denote the same parts or members as those appearing in Figs. 9 and 10.

The internal structure of this embodiment will be described first with specific reference to Fig. 2.

A rotary shaft 16 is press-fitted at its one end into a central bore of a disk 17 and at its other end to a central hole of the rotor holder 21, so that the disk 17 and the rotary holder 21 are integrally carried by the rotary shaft 16. The rotary shaft 16 is carried at its central portion by a bearing support portion 19 in the center of the stationary cylinder 3 through the intermediary of bearings 18a, 18b. Therefore, the disk 17 and the rotor holder 21 are rotatably mounted on the stationary cylinder 3 through the intermediary of the rotary shaft 16. In these Figures, a reference numeral 20 designates a stopper.

The disk 17 fits in the central bore 14 (see Fig. 1) of the rotary cylinder 2. A screw 27 is driven into a threaded hole 15a in the cylinder 2, thereby fixing the rotary cylinder 2 to the disk 17. The rotary cylinder 2 and the stationary cylinder 3 oppose each other leaving a very small gap 35 therebetween. Head bases 12, 12′ each mounting a magnetic head 10, 10′ are secured by means of screws 13, 13′ to the end surface 2a, i.e., the bottom surface, of the rotary cylinder 2 adjacent the stationary cylinder 3. Recesses 11, 11′ are formed in the above-mentioned end or bottom surface 2a of the rotary cylinder 2 such as to open in the outer peripheral surface 2b and to extend therefrom radially inwardly over a small distance. The magnetic heads 10, 10′ mounted on the head bases 12 are positioned above the recesses 11, 11′ and extend radially outwardly such that their outer extremities 10a project beyond the outer peripheral surface 2b of the rotary cylinder 2. The gap 35 between the rotary cylinder 2 and the stationary cylinder 3 must be very small, otherwise the gap will disturbs the layer of pressurized air between the outer peripheral surfaces of the rotary and stationary cylinders 2, 3 and the magnetic tape. This in turn requires the provision of the recesses 11, in order to permit the extremities 10a of the magnetic head 10 to be projected beyond the outer peripheral surface of the rotary cylinder 2.

On the other hand, an annular rotor 22 made of a magnet is secured to the rotor holder 21, while an annular stator 24 constituted by a coil is mounted on a stator holder 23 secured to the stationary cylinder 3, such as to oppose the rotor 22. As the coil of the stator 24 is energized with a predetermined driving current, the rotor is rotated by electromagnetic action between the stator 24 and the rotor 22, so that the shaft 16 and, hence, the rotary cylinder 2 are rotated.

A rotor 25 of a rotary transformer is fixed to the end of the stationary cylinder 3 adjacent the stationary cylinder 3, in such a manner as to oppose a stator 26 of the rotary transformer fixed to the stationary cylinder 3. The exchange of the recording signals or reproduced signals between the magnetic heads 10, 10′ and the external circuit is conducted through the rotor 25 and the stator 26.

Fig. 1 shows the rotary cylinder 2 as viewed from the side where the magnetic heads are located, i.e., in the directions of arrow line I—I. From this Figure, it will be seen that two head bases 12, 12′ mounting the magnetic heads 10, 10′ are secured to the rotary cylinder 2 by means of screws 13, 13′ precisely at 180° interval therebetween. It will be seen also that two recesses 11, 11′ are formed to open in the outer peripheral surface of the rotary cylinder 2 such as to allow the outer extremities of the magnetic heads 10, 10′ to project beyond the outer peripheral surface 2b of the rotor cylinder 2. When viewed from the outer peripheral side of the rotary cylinder 2 towards the radially inner side of the same, each of the recesses 11, 11′ exhibit recess which exhibits a substantially rectangular configuration.

Although only one screw 27 is shown in Fig. 2 as the means for fixing the rotary cylinder 2 to the disk 17, the illustrated embodiment actually employs two screws which are driven into respective holes 15a, 15b formed in the rotary cylinder 2 for fixing the rotary cylinder 2 to the disk 17, as will be seen from Fig. 1. From Fig. 2, it will be seen that the disk 17 is received in the central bore 14 of the rotary cylinder 2.

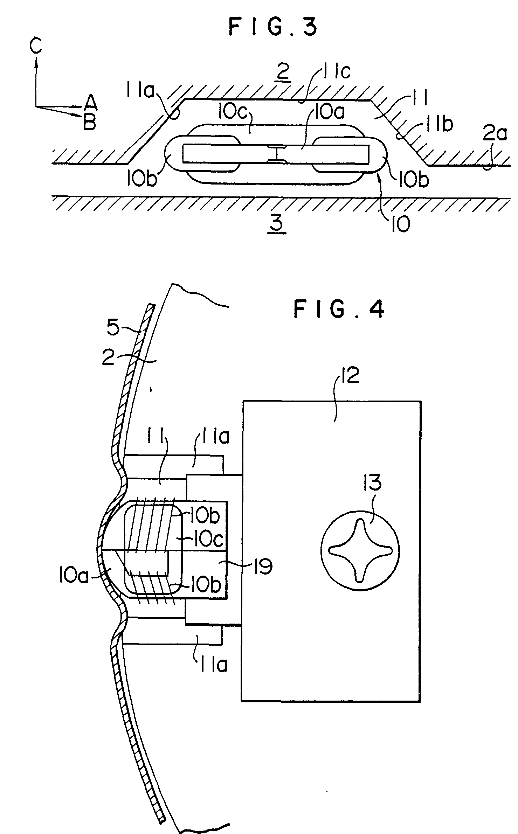

An explanation will be made hereinunder as to the recess 11, with specific reference to Fig. 3. The size of the recess 11 as measured in the direction of rotation of the rotary cylinder 2, i.e., the direction of an arrow A, will be referred to as "breadth" of the recess 11, while the size of the same as measured in the direction of axis of rotation of the rotary disk 2, i.e., the direction of an arrow C, will be referred to as "depth" of the recess 11.

The magnetic head 10 has a head core 10a on which a coil 10b is fixed integrally by means of a resin portion 10c. According to the invention, the breadth and the depth of the recess 11 are so determined that the magnetic head 10 may be fixed to the rotary cylinder 2 with a sufficient marging of positional precision such that the outer extremity of the magnetic head 10 projects from the outer peripheral surface of the rotary cylinder 2, while reducing the area of the recess as much as possible.

The leading end surface 11b and the trailing end surface 11a of the recess 11 as viewed in the direction of rotation of the rotary cylinder 2 are tapered with respect to the end surface 2a of the rotary cylinder 2 adjacent the stationary cylinder 3. More specifically, the recess 11 exhibits such a trapezoidal configuration that the breadth is greatest at the outer end near the magnetic head 10 and is progressively decreased along the axis away from the magnetic head 10, i.e., in the direction of the arrow C, when viewed from the outer peripheral side towards the radially inner end, i.e., from the left side to the right side in Fig. 1.

The recess 11 of the described configuration has an area which is further decreased from the area of the known recess 11 shown in Fig. 10, so that the amount of suction of the magnetic tape into the recess 11 is reduced advantageously. In addition, since a large angle is formed between both end walls 11a, 11b of the recess 11 and the bottom surface 11c of the same, the flow of air in the recess is made comparatively gentle, so that the turbulency of the air is reduced thereby remarkably suppressing the vibration tendency of the magnetic tape.

It is not always necessary that the end surfaces 11a, 11b of the recess 11 are flat as shown in Fig. 3. Namely, the end surfaces may be curved in, for example, arcuate form, provided that the breadth of the recess is progrsssively decreased along the axis, i.e., in the direction of the arrow C away from the magnetic head 10.

The rotary cylinder 2 is formed by roughly forming a blank with a required diameter, forming the recesses 11, and then grinding the peripheral surface of the rotary cylinder by means of a cutting tool. It is to be understood that, since the end surfaces 11a, 11b of the recess 11 are tapered with respect to the cutting tool, the cutting tool does not contact the end surfaces 11a, 11b perpendicularly thereto, so that any minute projections such as burs can be removed easily by the cutting tool. Figs. 3 and 4 show only one of the recesses 11 which is shown at the left side in Fig. 1. It will be clear to those skilled in the art that the recess 11' provided on the right side of Fig. 1 has the same configuration as the illustrated recess 11.

As has been described, the first embodiment of the invention is capable of suppressing the suction of the magnetic tape into the recesses formed in the rotary cylinder, while smoothing the flow of air in the recesses. This in turn protects the magnetic tape against damage and suppresses the vibration of the magnetic tape thereby ensuring a high quality of the reproduced image.

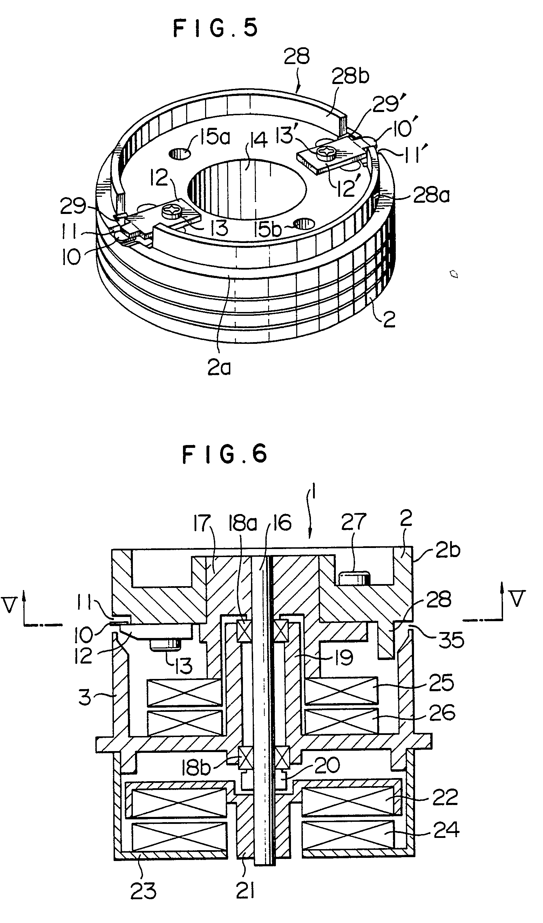

Figs. 5 to 7 show a second embodiment of the invention. In these Figures, the same reference numerals denote the same parts or members as those used in the first embodiment, and detailed description of such parts or members is omitted.

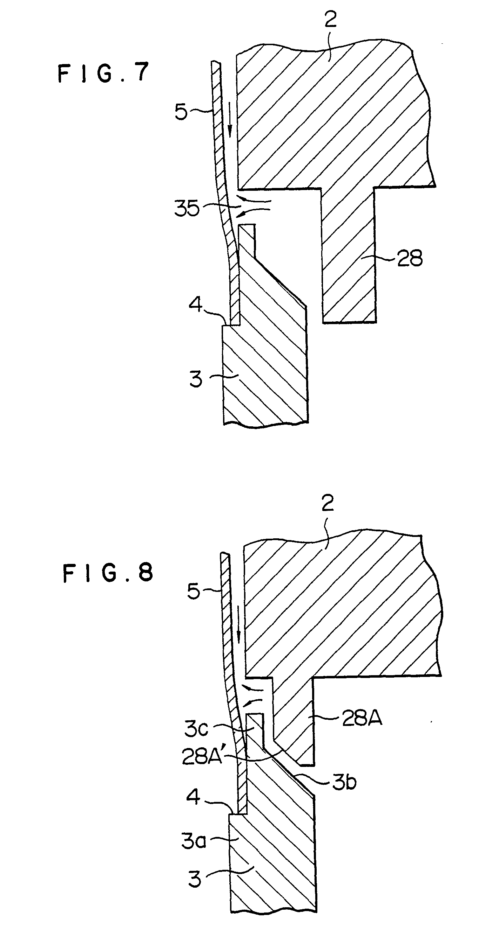

As will be seen from Figs. 5 and 6, in the second embodiment of the invention, the rotary cylinder device has an annular shielding wall generally designated at a numeral 28 formed on the bottom surface 2a of the rotary cylinder 2. The annular shielding wall 28 has two diametrically opposing cut-outs which provide the spaces for mounting the magnetic heads 10, 10'. Thus, the annular shielding wall 28 has two arcuate wall sections 28a, 28b separated from each other by the cut-outs. The cut-outs in the annular shielding wall 28 is provided with clearance grooves 29, 29 which make it possible to precisely fix the head bases 12, 12' to the rotary cylinder 2 in close contact with the bottom surface 2a of the latter. As will be seen from Fig. 6, the annular shielding wall 28 extends from the bottom surface 2a of the rotary cylinder 2 towards the stationary cylinder 3 in the direction of the axis of the rotary shaft 16 of the rotary cylinder 2, such as to cover the small gap 35 between the rotary cylinder 2 and the stationary cylinder 3, in such a manner that the outer peripheral surface of the shielding wall 28 faces the inner peripheral surface of the stationary cylinder 3. Therefore, the shielding wall 28 seals the interior of the rotary cylinder device 1 accommodating the head bases 12, 12', rotary transformer 25, 26 and other parts from the outer peripheral surface 2b of the rotary cylinder on which the magnetic tape is wound. This arrangement effectively prevents the fluctuation of air pressure in the rotary cylinder device 1 from being transmitted to the outer peripheral surface of the cylinder device, while preventing external air from flowing into the rotary cylinder device 1 through the small gap 35 due to a rise in the pressure of air between the magnetic tape 5 and the rotary cylinder device 1, as will be understood from Fig. 7. In consequence, a stable layer of air is formed between the outer peripheral surface of the rotary cylinder device and the magnetic tape, so that the magnetic tape is held stably in a floating condition slightly above the outer peripheral surface of the rotary cylinder device.

Fig. 8 shows a modification of the second embodiment. In this modification, the sealing wall 28A has a free end surface 28A' which is substantially complementary to the end surface 3b of the peripheral wall 3a of the stationary cylinder 3 adjacent the rotary cylinder 2. More specifically, the end surface 3b and the free end surface 28A' mentioned above are tapered inwardly and downwardly of the rotary cylinder device such as to face each other. In addition, the outer peripheral surface of the shielding wall 28A faces the inner peripheral surface of thin-walled upper end portion 3c of the peripheral wall 3a of the stationary cylinder 3. According to this modification, since the shielding wall 28A is disposed more closely to the peripheral wall 3c of the stationary cylinder 3 than in the embodiment shown in Fig. 7, the advantageous effect of the second embodiment explained in connection with Fig. 7 can be further increased. It will be clear to those skilled in the art that the illustrated forms of the shielding wall are only illustrative and various other forms are adoptable equally well provided that they can produce the shielding effect for sealing the small gap 35 between both cylinders such as to prevent the flow of air into and out of the rotary cylinder device through the small gap 35.

The portions of the second embodiment explained in connection with Figs. 5 to 8 other than specifically explained above are materially identical to those of the first embodiment. This second embodiment offers, besides the advantages brought about by the first embodiment, an additional advantage in that the magnetic tape can be stably held during running not only in the regions where the recesses are formed but also on other portions of the outer peripheral surface of the rotary cylinder device, thereby assuring a stable scanning by the magnetic heads and, hence, a further improvement in the quality of the reproduced image.

## Claims

1. A rotary cylinder device comprising: a rotary cylinder (2) having an axis of rotation and arranged opposed to and co-axial with a stationary cylinder (3) leaving a small gap (35) therebetween, said rotary cylinder having an end surface (2a) facing said stationary cylinder and an outer peripheral surface (2b), and recesses (11) formed in said end surface (2a) and opening in said outer peripheral surface (2b) such as to extend therefrom radially inwardly over a small distance, each of said recesses having a leading end wall (11b) and a trailing end wall (11a) as viewed in the direction of rotation of said rotary cylinder; and magnetic heads (10, 10') fixed to said rotary cylinder and positioned in said recesses and having outer extremities (10a) projecting beyond said outer peripheral surface (2b) of said rotary cylinder; characterized in that the distance between said leading end wall (11b) and said trailing end wall (11a) of each recess (11) is progressively decreased in a direction away from the stationary cylinder such that the distance is greatest at said end surface (2a) of the rotary cylinder (2) and smallest at the end of said recess remote from said stationary cylinder.

2. A rotary head device according to claim 1, wherein said leading and trailing end walls (11b, 11a) of said recess are flat and are tapered such that each recess exhibits a substantially trapeziodal configuaration when viewed from the outer peripheral side towards the radially inner side.

3. A rotary cylinder device according to claim 1, wherein said rotary cylinder (2) has a shielding wall (28) which extends in the direction of said axis of rotation of said rotary cylinder from said end surface (2a) of said rotary cylinder into said stationary cylinder (3), such as to cover said small gap (35) between said rotary cylinder and said stationary cylinder.

4. A rotary cylinder device according to claim 3, wherein said shielding wall has a free end furface (28A') having a shape complementary to an end surface (3b) of a peripheral wall of said stationary cylinder which is opposed to said rotary cylinder, said free end surface being positioned adjacent to said end surface of said stationary cylinder.

## Patentansprüche

1. Drehzylinder-Vorrichtung mit: einem Drehzylinder (2), der eine Drehachse hat und einem stationären Zylinder (3) gegenüberliegend und koaxial mit ihm angeordnet ist, wobei ein schmaler Spalt (35) dazwischenliegt, wobei der Drehzylinder eine Endfläche (2a) hat, die dem stationären Zylinder zugewandt ist, und eine äußere Randfläche (2b) und Vertiefungen (11), die in der Endfläche (2a) gebildet sind und sich in die äußere Randfläche (2b) öffnen, um sich von dort radial nach innen über einen kleinen Abstand zu erstrecken, wobei jede der Vertiefungen eine vordere Endwand (11b) und eine hintere Endwand (11a) hat, gesehen in der Drehrichtung des Drehzylinders; und Magnetköpfe (10, 10'), die an dem Drehzylinder befestigt und in den Vertiefungen angeordnet sind, und äußere Endstücke (10a) haben, die über die äußere Randfläche (2b) des Drehzylinders überstehen; dadurch gekennzeichnet, daß der Abstand zwischen der vorderen Endwand (11b) und der hinteren Endwand (11a) jeder Vertiefung (11) zunehmend in einer Richtung weg von dem stationären Zylinder abnimmt, sodaß der Abstand an der Endfläche (2a) des Drehzylinders (2) am größten und an dem Ende der von dem stationären Zylinder entfernten Vertiefung am kleinsten ist.

2. Drehzylinder-Vorrichtung nach Anspruch 1, wobei die vordere und hintere Endwand (11b, 11a) der Vertiefung flach und so angeschrägt sind, daß jede Vertiefung einen im wesentlichen trapezförmigen Aufbau zeigt, gesehen von der äußeren Randseite zu der radial inneren Seite hin.

3. Drehzylinder-Vorrichtung nach Anspruch 1, wobei der Drehzylinder (2) eine Abschirmwand (28) hat, die sich in der Richtung der Drehachse des Drehzylinders von der Endfläche (2a) des Drehzylinders in den stationären Zylinder (3) hinein erstreckt, sodaß sie den schmalen Spalt (35) zwischen dem Drehzylinder und dem stationären Zylinder bedeckt.

4. Drehzylinder-Vorrichtung nach Anspruch 3, wobei die Abschirmwand eine freie Endfläche (28A') hat, die eine zu einer Endfläche (3b) einer Randwand des stationären Zylinders komplementäre Gestalt hat, der dem Drehzylinder gegenüber liegt, wobei die freie Endfläche neben der Endfläche des stationären Zylinders angeordnet ist.

**Revendications**

1. Dispositif à cylindre rotatif comprenant:

un cylindre rotatif (2) possédant un axe de rotation et disposé en vis-à-vis de et coaxialement à un cylindre fixe (3) moyennant la présence d'un faible intervalle (35) entre les cylindres, ledit cylindre rotatif possédant une surface d'extrémité (2a) faisant face audit cylindre fixe et une surface périphérique extérieure (2b), et des renfoncements (11) ménagés dans ladite surface d'extrémité (2a) et débouchant dans ladite surface périphérique extérieure (2b) de manière à s'étendre radialement vers l'intérieur à partir de cette surface, sur une faible distance, chacun desdits renfoncements comportant une paroi d'extrémité avant (11b) et une paroi d'extrémité arrière (11a), lorsqu'on regarde dans le sens de rotation dudit cylindre rotatif; et des têtes magnétiques (10, 10') fixées audit cylindre rotatif et disposées dans lesdits renfoncements et comportant des extrémités extérieures (10a) faisant saillie au-delà de ladite surface périphérique extérieure (2b) dudit cylindre rotatif; caractérisé en ce que la distance entre ladite paroi d'extrémité avant (11b) et ladite paroi d'extrémité arrière (11a) de chaque renfoncement (11) diminue progressivement lorsqu'on s'écarte du cylindre fixe, de sorte que la distance est maximale au niveau de ladite surface d'extrémité (2a) du cylindre rotatif (2) et est minimale au niveau de l'extrémité dudit renfoncement, qui est éloignéedudit cylindre fixe.

2. Dispositif à cylindre rotatif selon la revendication 1, dans lequel lesdites parois d'extrémité avant et arrière (11b, 11a) dudit renfoncement sont plates et sont inclinées de sorte que chaque renfoncement présente une configuration sensiblement trapézoïdale lorsqu'on regarde en direction du côté intérieur du point de vue radial, à partir du côté périphérique extérieur.

3. Dispositif à cylindre rotatif selon la revendication 1, dans lequel ledit cylindre rotatif (2) comporte une paroi de protection (28), qui s'étend dans la direction dudit axe de rotation dudit cylindre rotatif depuis ladite surface d'extrémité (2a) dudit cylindre rotatif dans ledit cylindre fixe (3), de maniére à recouvrir ledit faible intervalle (35) entre ledit cylindre rotatif et ledit cylindre fixe.

4. Dispositif à cylindre rotatif selon la revendication 3, dans lequel ladite paroi de protection possède une surface d'extrémité libre (28A') ayant une forme complémentaire d'une surface d'extrémité (3b) d'une paroi périphérique dudit cylindre fixe, qui est située en vis-à-vis dudit cylindre rotatif, ladite surface d'extrémité libre étant disposée au voisinage de ladite surface d'extrémité dudit cylindre fixe.

EP 0 182 348 B1

FIG. 1

FIG. 2

1

# F I G . 3

# F I G . 4

FIG.5

FIG.6

FIG.7

FIG.8

# F I G . 9

# F I G . 10  PRIOR ART